# EUROPEAN PATENT APPLICATION

(11) **EP 3 796 661 A1**
(43) Date of publication of application: **24.03.2021**
(21) Application number: 19197978.0
(22) Date of filing: 18.09.2019
(51) Int. Cl.: H04N 21/235, H04N 7/15, H04N 7/18, H04N 21/431, H04N 21/2343, H04N 21/2665

(54) **MEDIA PIPELINE SYSTEM FOR DYNAMIC RESPONSIVE VISUALIZATION OF VIDEO STREAMS**

(71) Applicant: Siemens Aktiengesellschaft, 80333 München (DE)
(72) Inventor: Newman, Joseph, 82008 Unterhaching (DE); Bartsch, Ernst, 90489 Nürnberg (DE); Fries, Edgar, 91077 Neunkirchen am Brand (DE); Hutter, Andreas, 81673 München (DE); MacWilliams, Asa, 82256 Fürstenfeldbruck (DE); Ziehe, Bernd, 65835 Liederbach (DE)

(57) **Abstract**

A Method for displaying a video stream is described. The method comprises the steps of displaying a plurality of thumbnails (2a) of video streams in a first portion (2) of a screen (10) in a first format, wherein the video data are transmitted through a first data channel (53) of a media pipeline (50a) with a first data rate, displaying at least one of the video streams in the first portion (2) of the screen (10) in a second format after sending a trigger signal by the user, which preferably comprises hovering a mouse (4) over the portion (2b) of the thumbnail (2a) of the video stream, wherein the video data are transmitted through a second data channel (54) of the media pipeline (50a) with a second data rate and simultaneously displaying the at least one of the video streams in a second portion (3) of the screen (10) in a third format after selecting a video displayed in the second format in the first portion (2) of the screen (10), preferably by clicking by the mouse (4) on a video displayed in the second format in the first portion (2) of the screen (10), wherein the video data are transmitted through a third data channel (55) of the media pipeline (50a) with a third data rate. Further, a video pipeline system (50, 60) is described.

## Description

The invention concerns a method for visualizing a video stream. Further, the invention relates to a video pipeline system.

Video streams can be created in real time, also named as live video streams, or static. An example for creating a live video stream is a video of a security camera. An example of a static video stream is a video, which is saved as an MP4 file. Such a video can be paused and can be handled by operations like "seeking", which means moving temporally throughout the file. However, when a plurality of such video streams is displayed to a user, the user may not be able to pay attention to all of each one. Also the bandwidth for transmitting the plurality of video streams may not be sufficient, particularly, if some of the streams come from remote or inaccessible places, where connectivity is limited.

There are many different concepts for a user interface for a presentation of video streams, like players initiated by a button click or carousels. However, these concepts are not used for a presentation of live videos. Video feeds in social media are laid out linearly and are played automatically or require a click. Video streams are also involved in multipoint video conferencing platforms like WebEx or Circuit. Also advertisers have targeted users with videos using technologies like Flash or HTML5. However the advertisement videos are played simultaneously without the acceptance of the user.

Hence, there is a problem of how presenting a plurality of video streams to potentially multiple users simultaneously in a way that allows a choice of which video or videos would be displayed at a full resolution and framerate.

This problem is solved by a method for displaying a video stream according to claim 1 and a video pipeline system according to claim 10.

According to the method for displaying a video stream a plurality of thumbnails of video streams are displayed in a first portion of a screen in a first format, wherein the video data are transmitted through a first data channel of a media pipeline with a first data rate. Thumbnails are reduced-size versions of pictures of videos used to help in recognizing and organizing them, serving the same role for images as a normal test index does for words. For example, visual search engines and image-organizing programs normally use thumbnails, as do most modern operating systems or desktop environments. Using thumbnails, for example on web pages, helps avoiding the need to download larger files unnecessarily. Hence the size of the thumbnail and the first data rate of the first data channel can be dimensioned such that there is enough place on the screen of a user client and enough data transmission capacity for simultaneously displaying a plurality of thumbnails and additionally for displaying at least one full-sized video.

Further, at least one of the video streams is displayed in the first portion of the screen in a second format, the size of which is different from the size of the first format, after sending a trigger signal by the user, which preferably comprises hovering a mouse over the portion of the thumbnail of the video stream, wherein the video data are transmitted through a second data channel of the media pipeline with a second data rate. Using a different second format for displaying a video stream, which seems to be interesting for the user, particularly in case the size of the second format is more extensive than the size of the first format, allows the user to get some more detailed information about a video stream, in which he is possibly interested. Since the second format of the interesting video stream is different from the first format, also the data rate for transmitting the interesting video stream has to be different from the data rate for transmitting the video streams of the thumbnails, i.e. for example this data rate should be higher.

Furthermore the at least one of the video streams is simultaneously displayed in a second portion of the screen in a third format after selecting a video displayed in the second format in the first portion of the screen, preferably by clicking by the mouse on the first portion of the screen of a video displayed in the second format, wherein the video data are transmitted through a third data channel of the media pipeline with a third data rate. Hence, in case the user decides to watch the interesting video stream, the selected video is displayed in a usual quality. The advantage of the described method is that the user is given an overview of all the available video sources, which can be inspected by initiating a trigger event like for example a mouse-hover event and can be selected for full display. Hence data transmission capacities and video display screen are enabled to be split such that user gets the information in a most comfortable format.

The video pipeline system according to the invention comprises a media pipeline with a first data channel with a first data rate for transmitting video data for displaying a plurality of thumbnails of video streams in a first portion of a screen in a first format. The media pipeline also comprises a second data channel with a second data rate for transmitting video data for displaying at least one of the video streams in the first portion of the screen in a second format after sending a trigger signal by the user, which preferably comprises hovering a mouse over the portion of the thumbnail of the video stream. Further the media pipeline comprises a third data channel with a third data rate for transmitting video data for simultaneously displaying the at least one of the video streams in a second portion of the screen in a third format after selecting a video displayed in the second format in the first portion of the screen, preferably by clicking by the mouse on the first portion of the screen of a video displayed in the second format. The video pipeline system according to the invention shares the advantages of the method for displaying a video stream according to the invention.

The invention is based on a stack of two technologies: the first is a media server, which offers input and output of video streams and audio streams. The second is the transport for the media server, which is preferably based on WebRTC. WebRTC handles OSI layers 1 to 5. Further a browser is used for displaying the video streams on the above-mentioned screen. The browser handles presentation, which is referred to OSI layer 6. The media server uses WebRTC for transport, which covers OSI layers 5 to 7. The method of the invention is realized as a distributed application at layer 7 and orchestrates the signaling required to get everything to work together. For example, according to the HTML specification, the mouse hover event "onmouseover" could be used to trigger an RPC call to the media server. The flow through the media pipeline would then be altered so that the resolution and framerate increase.

The units of the video pipeline system mentioned above, in particular media pipeline with the first data channel, the second data channel and the third data channel can be completely or partially realized as software modules running on a media server. A realization largely in the form of software modules can have the advantage that applications already installed on an existing system can be updated, with relatively small effort, to install and run the method of the present application. The object of the invention is also achieved by a computer program product with a computer program that is directly loadable into the memory of a media server, and which comprises program units to perform the steps of the inventive method when the program is executed by the media server. In addition to the computer program, such a computer program product can also comprise further parts such as documentation and/or additional components, also hardware components such as a hardware key (dongle etc.) to facilitate access to the software.

A computer readable medium such as a memory stick, a hard-disk or other transportable or permanently-installed carrier can serve to transport and/or to store the executable parts of the computer program product so that these can be read from a media server. A method or unit can comprise one or more micromethods or their equivalents.

Particularly advantageous embodiments and features of the invention are given by the dependent claims, as revealed in the following description. Features of different claim categories may be combined as appropriate to give further embodiments not described herein.

According to an embodiment of the method for displaying a video stream according to the invention the first format comprises a small size, the second format comprises a midsize and the third format comprises a large, preferably a full size. As full size, the highest possible solution for displaying the video is meant. Advantageously, the user is able to determine, which of the video streams gets his full attention and therefore the most of the available display capacity.

Preferably the first data rate comprises a small value, the second data rate comprises a midsized value and the third data rate comprises a high value. Advantageously, the user is able to determine, which of the video streams gets his full attention and therefore gets the most of the available data transport capacity, which enables the best quality of depiction and information.

In an alternative version of the method for displaying a video stream according to the invention the video streams are displayed on a web page. A web page may be used for simultaneously providing video data to a plurality of users. Such a webpage may be for example part of a video portal.

It may be advantageous, if the first portion and the second portion are separated. In this advantageous version, the user has a better orientation where the different kind of information is displayed on the screen.

In another arrangement of the method for displaying a video stream according to the invention the plurality of video streams share some sort of context. Especially if the videos originate from some live source in a remote environment with limited connectivity the method according to the invention is advantageous, since the user gets a tool for having an overview of all the available video sources, for inspecting them by initiating a trigger event like a mouse-hover event and for selecting a video for full display.

In a variation of the method for displaying a video stream according to the invention video streams are used for a video conference with a common pipeline for multiple users. By sharing a common media pipeline with multiple users a shared experience or even collaboration can be enabled.

Alternatively, it may be advantageous, if each user is connected to his own video pipeline such that he has the freedom to select and interact with any video stream without affecting anybody else.

Further alternatively, multiple users are connected to the same set of WebRTC endpoint on the same media pipeline such that selections and interactions result in a change to quality and resolution automatically shared.

Other objects and features of the present invention will become apparent from the following detailed descriptions considered in conjunction with the accompanying drawings. It is to be understood, however, that the drawings are designed solely for the purposes of illustration and not as a definition of the limits of the invention. They are not necessarily drawn to scale.
FIG 1 shows a display of a computer client with an exemplary layout with thumbnails and big screen,
FIG 2 shows a schematic presentation of a video data transmission system according to an embodiment of the invention,
FIG 3 shows a schematic view of a media pipeline system according to an alternative embodiment of the invention,
FIG 4 shows a schematic view of a media pipeline system according to a further alternative embodiment of the invention,
FIG 5 shows a media pipeline system for simultaneous communication with different bandwidth and different quality according to an embodiment of the invention,
FIG 6 shows a media pipeline system with media pipelines according to an embodiment of the invention.

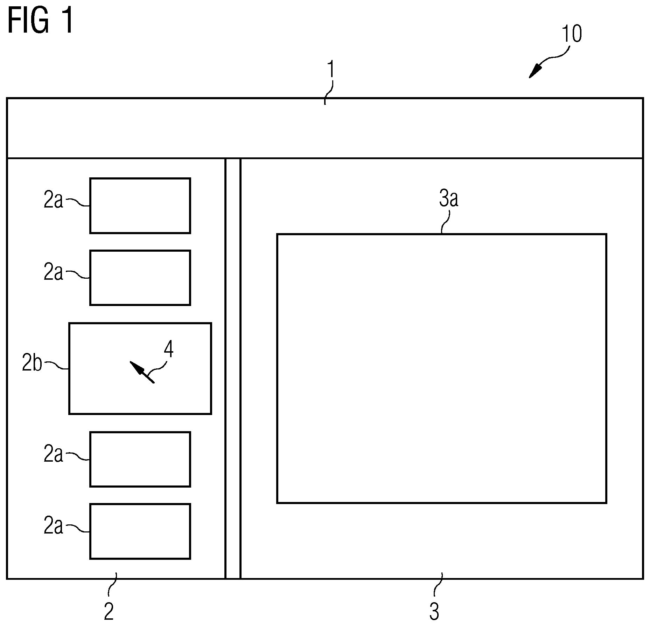

In FIG 1 a display 10 of a computer client is illustrated. The display 10 comprises an example layout with thumbnails 2a on the left side and a single selected video stream 3a on the right side. As you can see from FIG 1, at the top of the screen 10, there is an address field 1, which shows an address of a media server. The media server transmits video streams from a remote place to the computer client. Further, there is a second field 2 on the left side of the screen 10, which includes miniature thumbnails 2a which are transmitted to the client computer with reduced resolution and reduced framerate, for example, one frame every 5 seconds.

Furthermore, there is also a field 2b in the second field 2 with a more extensive area, which appears on the screen, if a mouse 4, symbolized as an arrow, hovers over a thumbnail 2a. This more extensive field 2b has an increased resolution compared to the thumbnails 2a and the video data shown on this field 2b are transmitted by a higher framerate such that user gets more information about the video stream displayed in the more extensive field 2b and is thereby enabled to decide whether to select for a display of the video stream shown in the more extensive field 2b in a full size resolution and quality.

If the user wants to watch the video stream of the more extensive field 2b in full size, he clicks with the mouse onto the surface of the more extensive field 2b. Then the selected video stream is displayed on the right side of the screen 10 in a field 3 for a full size screen 3a, which shows the selected video stream in full size and with full framerate, for example 25 frames per second, and with maximum quality, for example full HD. Hence, the user is enabled to simultaneously get image information about a plurality of videos without a loss of a lot of data transport capacity and display area, which can be used for the presentation of a selected video.

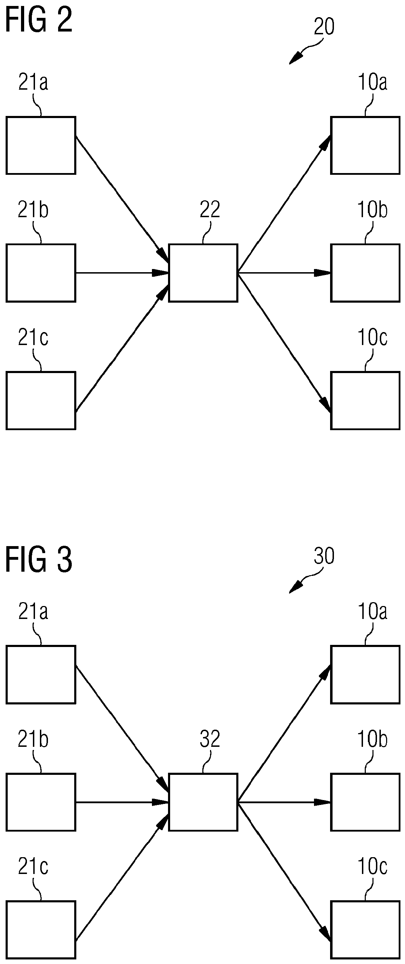

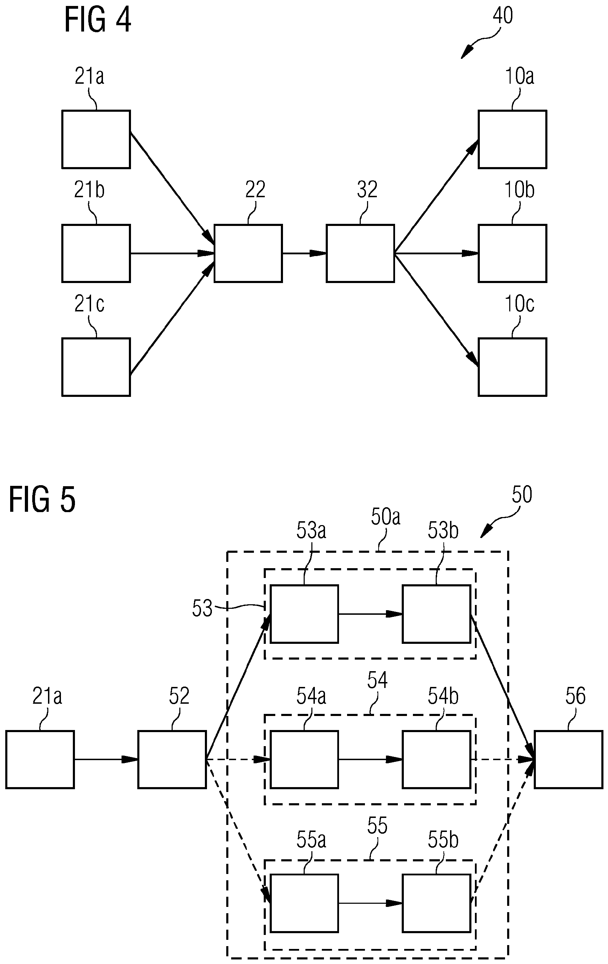

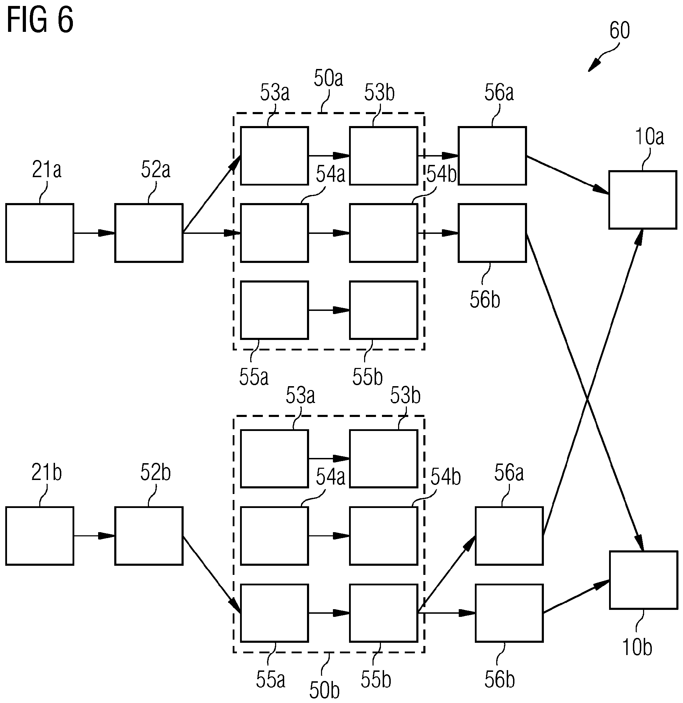

In FIG 2 a schematic view of a video data transmission system 20 according to an embodiment of the invention, also named as video pipeline system, is depicted. The video data transmission system 20 comprises a plurality of different camera units 21a, 21b, 21c. For example, a first camera unit is a so called PTZ-camera (PTZ = pan, tilt, zoom). A second camera unit 21b is part of a smartphone or table and a third camera 21c is a body-mounted action cam. These different cameras are used for recording a scene in a factory. The recorded video data are all sent as video stream data to a local media server 22, which is for example also located in the factory. The local media server 22 uses a media pipeline based on pipes- and-filters model, which is illustrated in detail in FIG 5 and FIG 6. The local media server 22 is connected to a plurality of remoted clients with display units 10a, 10b, 10c, each assigned to a different participant, wherein the remoted display units receive the recorded video stream data from the local media server 22. The media pipeline system 20 has a high capacity of data transport between the cameras 21a, 21b, 21c and the local media server 22, however the bandwidth of data transmission between the local media server 22 and the display units 10a, 10b, 10c is limited, which also limits the number of remoted participants.

In FIG 3 a schematic view of a media pipeline system 30 according to an alternative embodiment of the invention is depicted. Like the system 20 of FIG 2, the media pipeline system 30 also comprises different camera units 21a, 21b, 21c and display units 10a, 10b, 10c. In contrast to the system 20 depicted in FIG 2, the media pipeline system 30 of FIG 3 comprises a cloud-based media server 32. The advantage of the cloud-based media server 32 is the high bandwidth of the data transmission between the media server 32 and the display units 10a, 10b, 10c, which allows to scale the number of participants, but limits the number of cameras depending on resolution, quality and encoding.

In FIG 4 a schematic view of a media pipeline system 40 according to a further alternative embodiment of the invention is depicted. The data transmission system 40 includes similarly to the systems 20, 30 illustrated in FIG 2 and 3 three different camera units 21a, 21b, 21c and display units 10a, 10b, 10c. However in contrast to the embodiments mentioned before, the system 40 in FIG 4 combines a local media server 22, which is located in the factory, where the cameras are also positioned, with a cloud-based media server 32. Advantageously, this hybrid approach allows a more optimal use of the source bandwidth in the factory and a configurable network capability for scaling a number of participants based on the cloud-based media server 32.

In FIG 5 there is shown a media pipeline system 50. The media pipeline system 50 is realized on a media server, for example the local media server 22, 32 or 42, the address of which is displayed in FIG 1 on address field 1, and an endpoint device comprising a WebRTC endpoint 56, which is connected to a client display system (not shown in FIG 5). The media pipeline system 50 comprises a player endpoint 52, which generates video stream data based on RTSP-protocol (RTSP = real time streaming protocol). RTSP is a network protocol designed for use in entertainment and communications systems to control streaming media servers. The protocol is used for establishing and controlling media sessions between end points. Clients of media servers issue VHS-style commands, such as "play", "record" and "pause", to facilitate real-time control of the media streaming from the server to a client (video on demand) or from a client to the server (voice recording). The player endpoint 52 is connected to a PTZ-camera 21a, which is depicted on the left side of FIG 5. The PTZ-camera 21a is used for example for monitoring a zone in a factory. The PTZ-camera 21a sends video data to a physical server computer (not shown in FIG 5), which includes a server program, which generates the media pipeline system 50 including the player endpoint 52.

The media pipeline system 50 also comprises the media pipeline 50a itself, which includes a system of three different data channels 53, 54, 55. The three different data channels 53, 54, 55 have different data rates. For determining the different data rates, each of the three data channels 53, 54, 55 comprises an individual scaler 53a, 54a, 55a and an individual framerate throttler 53b, 54b, 55b. For example, the first channel 53 is adjusted to a slow video data rate. For a slow data rate, the first scaler 53a, which is part of a first data channel 53, adjusts the size of the transmitted frames to 160 pixel ^{∗} 120 pixels and the first throttler 53b, which is also part of the first channel 53, adjusts the framerate to a slow rate of 1 frame per 5 seconds. Hence, the video stream data generated by the player endpoint 52 are transmitted on a small data rate to a connected WebRTC endpoint 56. The Web RTC endpoint 56, which is also part of the media pipeline 50, however generated on a different server computer, not on the media server, receives the video data stream transmitted through the pipeline 50a and sends the video data stream to a user client (not shown), which is connected to the WebRTC endpoint 56. In this case, the screen of the user client computer, which may be for example the screen 10 illustrated in FIG 1, shows a thumbnail 2a on the left field 2.

In case the user hovers with his mouse 4 (shown in FIG 1) over the displayed thumbnail 2a, an order is sent to the player endpoint 52 for connecting to the second data channel 54.

The second data channel 54 is adjusted to a medium video data rate. For a medium data rate, a second scaler 54a, which is part of the second channel 54, adjusts the size of the transmitted frames to 240 pixel ^{∗} 180 pixels and a second throttler 54b, which is part of the second data channel 54, adjusts the framerate to a medium rate of 10 frames per second. Hence, the video stream data generated by the player endpoint 52 are transmitted on a medium data rate to the connected WebRTC endpoint 56. The Web RTC 56 endpoint receives the video data stream transmitted through the media pipeline 50a and sends the video data stream to a user client (not shown), which is connected to the WebRTC endpoint 56. In this case a medium sized video is displayed on a more extensive field 2b of the screen of the user client computer, which may be for example the screen 10 illustrated in FIG 1.

In case the user clicks on the more extensive field 2b, since he likes the video shown on the more extensive field 2b, an order is sent back to the player endpoint 52 for connecting to the third channel 55.

The third channel 55 is adjusted to a high video data rate. For a high video data rate, a third scaler 55a, which is part of the third data channel 55, adjusts the size of the transmitted frames to full HD, which is 1920 pixel ^{∗} 1080 pixels and a third throttler 55b, which is part of the third data channel 55, adjusts the framerate to a high rate of 25 frames per second. Hence, the video stream data generated by the player endpoint 52 are transmitted on a high data rate to the connected WebRTC endpoint 56. The WebRTC endpoint 56 receives the video data stream transmitted through the pipeline 50a and sends the video data stream to a user client (not shown), which is connected to the WebRTC endpoint 56. In this case, a full sized video is displayed on a full size screen field 3 of a screen 10 of a user client computer shown on the right side in FIG 1.

Hence the media server, which may be a local media server or a cloud-based media server, uses a so-called pipes-and-filters design pattern to change the characteristics of the video stream delivered to a client. In the shown embodiment, there are three paths through the media pipeline and by disconnecting and reconnecting different filters 53a, 53b, 54a, 54b, 55a, 55b it is possible to change the video stream at runtime without explicitly negotiating a connection to a new video stream.

In case a plurality of different videos are intended to be transmitted to a user, the media pipeline system may comprise a plurality of parallel pipelines and WebRTC endpoints, wherein each pipeline and each WebRTC endpoint is assigned to a different video data stream.

In FIG 6 a video data transmission system 60 with two media pipelines 50a, 50b, a first media pipeline 50a and a second media pipeline 50b, is shown. The video data transmission system 60 comprises two cameras 21a, 21b and two display units 10a, 10b of two different participants. To each of the cameras 21a, 21b a different player endpoint 52a, 52b and a different media pipeline 50a, 50b is assigned. To each of the media pipelines 50a, 50b two different WebRTC endpoints 56a, 56b are assigned for each different display unit 10a, 10b. As you can see from FIG 6, both display units 10a, 10b show the video stream of the second camera 21b in a full size version, since both end points 56a, 56b assigned to the second media pipeline 50b are connected to the third channel 55a, 55b, which is connected between the player endpoint 52b of the second camera 21b and the end points 56a, 56b of the second media pipeline 50b. For example the participant assigned to the second display 10b is the moderator. When the moderator hovers his mouse pointer over the video stream from the first camera 21a, the first media pipeline 50a connected to the first camera 21a is reconfigured and the moderator is connected to the second channel 54a, 54b of the first media pipeline 50a and he gets a higher resolution and a higher framerate video stream from the first camera 21a, while the first participant, assigned to the first display 10a still gets the low resolution and low framerate version of the video stream of the first camera 21a.

Although the present invention has been disclosed in the form of preferred embodiments and variations thereon, it will be understood that numerous additional modifications and variations could be made thereto without departing from the scope of the invention. For the sake of clarity, it is to be understood that the use of 'a' or 'an' throughout this application does not exclude a plurality, and 'comprising' does not exclude other steps or elements.

## Claims

1. Method for displaying a video stream, comprising the steps:
- displaying a plurality of thumbnails (2a) of video streams in a first portion (2) of a screen (10) in a first format, wherein the video data are transmitted through a first data channel (53) of a media pipeline (50a) with a first data rate,
- displaying at least one of the video streams in the first portion (2) of the screen (10) in a second format, the size of which is different from the size of the first format, after sending a trigger signal by the user, which preferably comprises hovering a mouse (4) over the portion (2b) of the thumbnail (2a) of the video stream, wherein the video data are transmitted through a second data channel (54) of the media pipeline (50a) with a second data rate,
- simultaneously displaying the at least one of the video streams in a second portion (3) of the screen (10) in a third format after selecting a video displayed in the second format in the first portion (2) of the screen (10), preferably by clicking by the mouse (4) on the video displayed in the second format in the first portion (2) of the screen (10), wherein the video data are transmitted through a third data channel (55) of the media pipeline (50a) with a third data rate.

2. Method according to claim 1, wherein
- the first format comprises a small size,
- the second format comprises a midsize and
- the third format comprises a big size.

3. Method according to claim 1 or 2, wherein
- the first data rate comprises a small value,
- the second data rate comprises a midsized value and
- the third data rate comprises a high value.

4. Method claim according to one of the preceding claims, wherein the video streams are displayed on a web page.

5. Method claim according to one of the preceding claims, wherein the first portion (2) and the second portion (3) are spatially separated from each other.

6. Method claim according to one of the preceding claims, wherein the plurality of video streams share some sort of context.

7. Method claim according to one of the preceding claims, wherein the video streams are used for a video conference with a common pipeline (50a) for multiple users (27).

8. Method claim according to one of the preceding claims, wherein each user (10a, 10b) is connected to his own video pipeline (50a, 50b).

9. Method claim according to one of claims 1 to 7, wherein multiple users are connected to the same set of WebRTC endpoints (56a, 56b) on the same media pipeline (50a).

10. Video pipeline system (20, 30, 40, 50, 60), comprising a media pipeline (50a, 50b) with:
- a first data channel (53) with a first data rate for transmitting video data for displaying a plurality of thumbnails (2a) of video streams in a first portion (2) of a screen (10) in a first format,
- a second data channel (54) with a second data rate for transmitting video data for displaying at least one of the video streams in the first portion (2) of the screen (10) in a second format, the size of which is different from the size of the first format, after sending a trigger signal by the user, which preferably comprises hovering a mouse (4) over the portion (2b) of the thumbnail (2a) of the video stream,
- a third data channel (55) with a third data rate for transmitting video data for simultaneously displaying the at least one of the video streams in a second portion (3) of the screen (10) in a third format after selecting a video displayed in the second format in the first portion (2) of the screen (10), preferably by clicking by the mouse (4) on a video displayed in the second format in the first portion (2) of the screen (10).

11. A computer program product comprising a computer program that is directly loadable into a memory of a media server (22, 32) and which comprises program elements for performing steps of the method according to any of claims 1 to 9 when the computer program is executed by the media server (22, 32) .

12. A computer-readable medium on which are stored program elements that can be read and executed by a computer unit in order to perform steps of the method according to any of claims 1 to 9 when the program elements are executed by the computer unit.
